# EUROPÄISCHE PATENTSCHRIFT

(11) **EP 2 310 336 B1**
(45) Veröffentlichungstag und Bekanntmachung des Hinweises auf die Patenterteilung: **10.09.2014**
(21) Anmeldenummer: 09786072.0
(22) Anmeldetag: 28.07.2009
(51) Int. Cl.: C04B 28/08, C04B 28/02, C04B 28/14

(54) **HYDRAULISCHES BINDEMITTEL**
HYDRAULIC BINDER
LIANT HYDRAULIQUE

(30) Priorität: 07.08.2008 AT 12312008
(43) Veröffentlichungstag der Anmeldung: 20.04.2011
(73) Patentinhaber: Holcim Technology Ltd., 8645 Rapperswil-Jona (CH)
(72) Erfinder: ADLER, Michael, CH-3034 Murzelen (CH); KO, Suz-Chung, CH-5600 Lenzburg (CH)
(74) Vertreter: Keschmann, Marc
(86) Internationale Anmeldenummer: PCT/IB2009/006374
(87) Internationale Veröffentlichungsnummer: WO 2010/015907

(56) Entgegenhaltungen:
- EP-A- 1 091 913
- EP-A- 1 195 361
- DE-C- 401 863
- US-A1- 2007 181 041
- 1998, BUTTERWORTH-HEINEMANN , OXFORD , XP002564389 JACKSON, P.: Portland Cement: Classification and Manufacture, "Burnt shale"; chapter 2.1.1.7 in HEWLETT,P.: Lea`s Chemistry of Cement and Concrete

## Beschreibung

Die Erfindung betrifft ein hydraulisches Bindemittel enthaltend CaSO₄, Hochofenschlacke und thermisch behandelte Tone und Mergel.

Die Zusammensetzung und Herstellung von supersulfatiertem Hüttenzement basiert auf der Zugabe von Calciumsulfat zum Zement. Gemäß der Internationalen Normungsorganisation (ISO) ist supersulfatierter Zement als Mischung von mindestens 75 Gew.% zerkleinerter granulierter Hochofenschlacke, großen Zusätzen von Calciumsulfat (> 5 Gew.% SO₃) und maximal 5 Gew.% gelöschtem Kalk, Portlandzementklinker oder Portlandzement definiert.

Zur Herstellung von supersulfatiertem Zement muss die granulierte Schlacke gemäß der deutschen Norm mindestens 13 Gew.% Al₂O₃ enthalten und der Formel (CaO + MgO + Al₂O₃)/SiO₂ > 1,6 entsprechen. Nach Keil wird eine Menge von 15 bis 20 % Tonerdeschlacke mit einem Mindestmodulus von (CaO + CaS + 0,5 MgO + Al₂O₃)/(SiO₂ + MnO) > 1,8 bevorzugt. Gemäß Blondiau muss das CaO/SiO₂-verhältnis zwischen 1,45 und 1,54 und das Al₂O₃/SiO₂-Verhältnis zwischen 1,8 und 1,9 betragen.

Kalk, Klinker oder Zement wird hierbei zugesetzt, um den pH-Wert in der Zementpaste zu erhöhen und die Auflöslichkeit von Tonerderde in der flüssigen Phase während der Hydratisierung des Zements zu erleichtern. Die Härtung von supersulfatiertem Hüttenzement kann ohne chemische Zusätze oder eine spezielle Formungsbehandlung erfolgen.

In gewöhnlichen Portlandzementen und Hüttenzementen, bei denen die Hydratisierung in flüssiger Phase frei von in Lösung befindlicher Tonerde stattfindet, ist der Gehalt an Calciumsulfat auf einen niedrigen Prozentsatz beschränkt, um einen eventuellen inneren Zerfall aufgrund der Bildung von Calciumsulfoaluminat (Candlot bacilli) als Folge der nicht in Lösung gegangenen Tonerde zu vermeiden. In diesen Zementen besteht der Haupteinfluss von Calciumsulfat in der Verzögerungswirkung, die es auf die Abbindezeit ausübt. Die Basizität der hydratisierten Calciumaluminate sowie die Unlöslichkeit der in den Aluminaten enthaltenen Tonerde hängt von der Kalkkonzentration in der flüssigen Phase des Zements während der Hydratisierung ab, und zwar unabhängig davon, ob die hydratisierten Calciumaluminate im gehärteten Zement in kristalliner Form oder in amorpher Form vorliegen. Die Kalkkonzentration in der flüssigen Phase bestimmt die Art des Einflusses des Calciumsulfats auf die Abbindezeit des Zements und die maximale Calciumsulfatmenge, die der Zement enthalten kann, ohne dass es zu einem inneren Zerfall durch zeitversetzte Ettringitbildung kommt.

In supersulfatiertem Hüttenzement liegt die Kalkkonzentration in der flüssigen Phase unter der Unlöslichkeitsgrenze der Tonerde. Größere Zugaben von Calciumsulfat zwecks Aktivierung der Reaktionen von Hochofenschlacke bestimmen die Bildung von Tricalciumsulfoaluminat mit hoher hydraulischer Aktivität auf Basis des in Lösung befindlichen Kalks und der in Lösung befindlichen Tonerde, ohne zu einem eventuellen Zerfall zu führen. Die Zugabe von Calciumsulfat zu granulierter Hochofenschlacke erzeugt keinen Expansionszement, sondern wirkt als Beschleunigungsmittel bei der Bildung von hydratisierten Bestandteilen. In supersulfatiertem Zement sind größere Anteile an Calciumsulfat nicht als störend anzusehen. Die Tricalciumsulfoaluminate, zu denen sie führen, tragen vielmehr zu einer Erhöhung der hydraulischen Aktivität bei, anstatt einen Zerfall zu bewirken, wie es bei Portlandzement und normalem Hüttenzement der Fall ist.

Das anfängliche Abbinden und Aushärten von supersulfatiertem Zement geht Hand in Hand mit der Bildung der Hochsulfatform von Calciumsulfoaluminat aus den Schlackenkomponenten und dem zugesetzten Calciumsulfat. Die Zugabe von Portlandzement zu Zement ist hierbei zur Einstellung der richtigen Alkalinität erforderlich, damit die Bildung von Ettringit ermöglicht wird. Die wichtigsten Hydratisierungsprodukte sind die Mono- und Trisulfoaluminattobermorit-ähnliche Phase und Tonerde.

Supersulfatierter Zement verbindet sich bei der Hydratisierung mit mehr Wasser als Portlandzement. Er erfüllt alle Normvorschriften von Zement hinsichtlich Mahlfeinheit. Er wird als Zement mit niedrigem Heizwert angesehen. Wie jeder andere Portland- oder Hüttenzement kann er in Form von Beton, Verputzmörtel oder Fugenmörtel verwendet werden. Die bei der Verwendung von supersulfatiertem Zement zu beachtenden Bedingungen sind identisch mit jenen, die bei der Auswahl, der Mischung und dem Auftrag von anderen Zementen maßgebend sind.

Zur Verbesserung von Aluminosilicat-Bindemitteln wurde bereits vorgeschlagen, diese mit Alkali und insbesondere Sodalauge oder Ätzkalilauge zu aktivieren.

Alkali aktivierte Aluminosilicat-Bindemittel (AAAS) sind zementartige Materialien, die durch Umsetzung von feinen Silika-und Tonerdefeststoffen mit einer Alkali- oder Alkalisalzlösung zur Herstellung von Gelen und kristallinen Verbindungen gebildet werden. Die Technologie der Alkaliaktivierung wurde ursprünglich 1930 bis 1940 von Purdon entwickelt, der entdeckt hatte, dass die Zugabe von Alkali zu Schlacke ein rasch härtendes Bindemittel liefert.

Im Gegensatz zu supersulfatiertem Zement kann eine große Vielfalt von Materialien (natürlicher oder gebrannter Ton, Schlacke, Flugasche, Belitschlämme, gemahlener Stein, etc.) als Quelle für Aluminosilicatmaterialien herangezogen werden. Verschiedene Alkalilösungen können zur Erzeugung von Härtungsreaktionen verwendet werden (Alkalihydroxid, Silicat, Sulfat und Carbonat, etc.). Das bedeutet, dass die Quellen für AAAS-Bindemitteln nahezu unbegrenzt sind.

Während der Alkaliaktivierung wirkt eine hohe Konzentration von OH-Ionen in der Mischung auf die Aluminosilicate. Während in Portland- oder supersulfatierter Zementpaste aufgrund der Löslichkeit von Calciumhydroxid ein pH > 12 erzeugt wird, liegt der pH-Wert im AAAS-System über 13,5. Die Menge an Alkali, die im Allgemeinen 2 bis 25 Gew.% Alkali (> 3% Na₂O) beträgt, hängt von der Alkalinität der Aluminosilicate ab.

Die Reaktivität eines AAAS-Bindemittels hängt von seiner chemischen und mineralischen Zusammensetzung, dem Verglasungsgrad und der Mahlfeinheit ab. Im Allgemeinen können AAAS-Bindemittel innerhalb von 15 Minuten mit dem Abbinden beginnen und bieten auf lange Sicht eine rasche Aushärtung und einen starken Festigkeitszuwachs. Die Abbindereaktion und der Härtungsprozess sind nach wie vor nicht ganz klar. Sie gehen mit der anfänglichen Auslaugung von Alkali und der Bildung von schwach kristallinen Calciumhydrosilicaten der Tobermoritgruppe vor sich. Calciumaluminosilicate beginnen zu kristallisieren, um zeolitartige Produkte und in der Folge Alkalizeolite zu bilden.

Die Festigkeitswerte im AAAS-System werden dem starken Kristallisationskontakt zwischen Zeoliten und Calciumhydrosilicaten zugeschrieben. Die hydraulische Aktivität wird durch eine Erhöhung der Alkalidosen verbessert. Die Beziehung zwischen der hydraulischen Aktivität und der Alkalimenge sowie der Anwe-senheit von Zeolit in den hydratisierten Produkten hat gezeigt, dass Alkali nicht nur als einfache Katalysatoren wirken, son-, dern an Reaktionen auf dieselbe Weise wie Kalk und Gips teilnehmen und aufgrund eines starken Kationeneinflusses eine relativ hohe Festigkeit aufweisen.

Es wurde von vielen Studien betreffend die Aktivierung von Silicoaluminatmaterialien mit Alkali und ihren Salzen berichtet.

In der WO 00/00447 wurde ein hydraulische Bindemittel vorgeschlagen, bei welchem die Aktivierung unter weitgehender Vermeidung der Verwendung teurer Chemikalien wie Natronlauge oder Kalilauge unter gleichzeitiger Bewahrung der Festigkeitswerte von Standardbindemitteln vorgenommen wurde. Dies konnte dadurch erreicht werden, dass Aluminosilikate aus der Gruppe bestehend aus Hochofenschlacke, Ton, Mergel und industriellen Nebenprodukten wie beispielsweise Flugasche mit der Maßgabe, dass der Al₂O₃-Gehalt größer als 5 % ist, verwendet wurden, wobei Hochofenschlacke in Mengen von mehr als 35 Gew.% verwendet wurde und Ton, Mergel und/oder Flugasche in Mengen von größer als 5 Gew.% vorlagen und Zementofenstaub in Mengen von 3 bis 10 Gew.% als Aktivator zugegeben wurde, wobei Kalziumsulfat in Mengen größer als 5 Gew.% eingesetzt wurde. Durch die Verwendung von Zementofenstaub als Aktivator konnten der pH-Wert entsprechend gesenkt werden und es zeigte sich, dass die Aktivierung durch Zementofenstaub gegenüber der Wahl der Ausgangsmaterialien weitgehend unempfindlich war. Bei diesem hydraulischen Bindemittel wurde Ton oder Mergel nach einer thermischen Aktivierung bei Temperaturen von 600° bis 850° C eingesetzt und es konnte jegliche granulierte Hochofenschlacke eingesetzt werden, sodass die genaue Zusammensetzung der Hochofenschlacke weitgehend unkritisch war.

EP 1195361 A und EP 1091913 A offenbaren als alkalische Aktivatoren Kalziumacetat bzw. Kaliumhydroxid.

Es ist nun Aufgabe der vorliegenden Erfindung, ein hydraulisches Bindemittel zu schaffen, bei welchem die Zusammensetzung weiter vereinfacht werden kann und insbesondere die Qualität der eingesetzten Hochofenschlacke von nur untergeordneter Bedeutung ist. Gleichzeitig soll es mit dem hydraulischen Bindemittel gelingen, ein entsprechend schnelles Abbinden zu bewirken und verbesserte Festigkeitswerte des abgebundenen Bindemittels zu erreichen. Zur Lösung dieser Aufgabe ist ein hydraulisches Bindemittel enthaltend CaSO₄, Hochofenschlacke und thermisch behandelte Tone und Mergel dahingehend weitergebildet, dass als thermisch behandelte Tone und Mergel gebrannter Ölschiefer eingesetzt ist und dass als Festigkeitsverbesserer NaSCN, KAl(SO₄)₂, Ca(NO₃)₂, Ca(NO₂)₂, Ca(HCOO)₂ und/oder Triethanolamin in Mengen von 0,5 - 5 Gew.% eingesetzt sind. Dadurch, dass als thermisch behandelte Tone und Mergel gebrannter Ölschiefer eingesetzt ist, kann supersulfatierter Zement ohne einen weiteren Aktivator, wie z.B. Klinker, Zementofenstaub oder Alkalien gebildet werden. Der Einsatz von gebranntem Ölschiefer in der erfindungsgemäßen Zusammensetzung verbessert die Spätfestigkeit und vermindert Schwinden, wobei zusätzlich eine verminderte Sauerstoffpermeabilität erreicht wird, welche wiederum zu einer verbesserten Dauerhaftigkeit des Bindemittelprodukts führt. Zur weiteren Verbesserung der Eigenschaften des abgebundenen Bindemittels werden erfindungsgemäß Festigkeitsverbesserer in Form von organischen und/oder anorganischen Alkali- und/oder Erdalkaliverbindungen eingesetzt.

Mit Vorteil ist das hydraulische Bindemittel gemäß der vorliegenden Erfindung dahingehend weitergebildet, dass CaSO₄ in Mengen von 5 - 20 Gew.%, Hochofenschlacke in Mengen von 50 - 85 Gew.% und gebrannter Ölschiefer in Mengen von 10 - 30 Gew.% eingesetzt sind.

Im Allgemeinen werden verbesserte Frühfestigkeitswerte erreicht, wenn das hydraulische Bindemittel einen hohen Vermahlungsgrad aufweist. Das erfindungsgemäße Bindemittel kann daher mit Vorteil dahingehend weitergebildet sein, dass die Bestandteile des hydraulischen Bindemittels auf Blaine-Werte von ≥ 4500 Blaine vermahlen sind.

Die Erfindung wird nachfolgend anhand eines Ausführungsbeispiels näher erläutert.

In Tabelle 1 ist eine Zusammensetzung eines Bindemittels gemäß dem Stand der Technik einer Zusammensetzung eines erfindungsgemäßen Bindemittels gegenübergestellt.

In Tabelle 1 ist eine Zusammensetzung eines Bindemittels gemäß dem Stand der Technik einer Zusammensetzung eines erfindungsgemäßen Bindemittels gegenübergestellt.

**Tabelle 1:**

| | | | |
|---|---|---|---|
| Granulierte Hochofenschlacke | | 84,5 | 63 |
| Gebrannter Ölschiefer | | | 20 |
| CaSO₄ | | 15 | 15 |
| Aktivator | | 0,5 | |
| Festigkeitsverbesserer | | | 2% |
| 1DCS [MPa] | | 2,4 | 11,5 |
| 7DCS [MPa] | | 28,0 | 42,6 |
| 28DCS [MPa] | | 51,6 | 58,8 |

Bei dem erfindungsgemäßen Bindemittel konnte der Gehalt an granulierter Hochofenschlacke in dem Maß verringert werden, in dem gebrannter Ölschiefer zugesetzt wurde, wobei der Gehalt an CaSO₄ beibehalten wurde. Der gebrannte Ölschiefer fungiert hierbei zusätzlich als Aktivator, sodass die Zugabe eines separaten Aktivators bei dem Bindemittel gemäß der vorliegenden Erfindung entfallen kann. Durch die Zugabe von Festigkeitsverbesserern in Mengen von 2 % konnten die Festigkeitswerte nach 1, 7 bzw. 28 Tag(en) gegenüber den herkömmlichen Bindemitteln deutlich verbessert werden.

Aus Tabelle 2 lässt sich erkennen, dass neben deutlich verbesserten Spätfestigkeitswerten in Beton auch die Sauerstoffpermeabilität des erfindungsgemäßen Bindmittels gegenüber einem herkömmlichen, industriellen supersulfatierten Bindemittel deutlich reduziert war.

**Tabelle 2:**

| Zementart | Industrieller supersulfatierter Zement (Stand der Technik) | Supersulfatierter Zement mit gebranntem Ölschiefer und Festigkeitsverbesserer (gemäß Erfindung) |
|---|---|---|
| Zementgehalt | 400 kg/m³ | |
| Wasser/Zement | 0,53 | 0,52 |
| 1DCS [MPa] | 7,3 | 7,8 |
| 2DCS [MPa] | 16,3 | 14,4 |
| 7DCS [MPa] | 32,3 | 33,5 |
| 28DCS [MPa] | 40,3 | 49,5 |
| O₂ perm. [E-16m²] | 2,44 | 0,81 |

## Patentansprüche

1. Hydraulisches Bindemittel enthaltend CaSO₄, Hochofenschlacke und thermisch behandelte Tone und Mergel, **dadurch gekennzeichnet, dass** als thermisch behandelte Tone und Mergel gebrannter Ölschiefer eingesetzt ist und dass als Festigkeitsverbesserer NaSCN, KAl(SO₄)₂, Ca(NO₃)₂, Ca(NO₂)₂, Ca(HCOO)₂ und/oder Triethanolamin in Mengen von 0,5 - 5 Gew.% eingesetzt sind.

2. Hydraulisches Bindemittel nach Anspruch 1, **dadurch gekennzeichnet, dass** CaSO₄ in Mengen von 5 - 20 Gew.%, Hochofenschlacke in Mengen von 50 - 85 Gew.% und gebrannter Ölschiefer in Mengen von 10 - 30 Gew.% eingesetzt sind.

3. Hydraulisches Bindemittel nach Anspruch 1 oder 2, **dadurch gekennzeichnet, dass** die Bestandteile des hydraulischen Bindemittels auf Blaine-Werte von ≥ 4500 Blaine vermahlen sind.

## Claims

1. A hydraulic binder containing CaSO₄, blast furnace slag and heat-treated clays and marls, **characterized in that** burnt oil shale is used as heat-treated clays and marls, and that NaSCN, KAl(SO₄)₂, Ca(NO₃)₂, Ca(NO₂)₂, Ca(HCOO)₂ and/or triethanolamine are used in amounts of 0.5-5% by weight as strengtheners.

2. A hydraulic binder according to claim 1, **characterized in that** CaSO₄ is used in amounts of 5-20% by weight, blast furnace slag is used in amounts of 50-85% by weight, and burnt oil shale is used in amounts of 10-30% by weight.

3. A hydraulic binder according to claim 1 or 2, **characterized in that** the components of the hydraulic binder are ground to Blaine finesses of > 4500 Blaine.

## Revendications

1. Liant hydraulique contenant du CaSO₄, un laitier de haut-fourneau et des argiles et marnes ayant subi un traitement thermique, **caractérisé en ce qu'**on utilise en tant qu'argiles et marnes ayant subi un traitement thermique des schistes bitumineux calcinés, et que l'on utilise en tant qu'additif améliorant la résistance du NaSCN, du K-Al(SO₄)₂, du Ca(NO₃)₂, du Ca(NO₂)₂, du Ca(HCOO)₂ et/ou de la triéthanolamine en des quantités de 0,5 à 5 % en poids.

2. Liant hydraulique selon la revendication 1, **caractérisé en ce qu'**on utilise le CaSO₄ en des quantités de 5 à 20 % en poids, le laitier de haut-fourneau en des quantités de 50 à 85 % en poids et les schistes bitumineux calcinés en des quantités de 10 à 30 % en poids.

3. Liant hydraulique selon la revendication 1 ou 2, **caractérisé en ce que** les constituants du liant hydraulique sont broyés jusqu'à une valeur de Blaine ≥ 4500 Blaine.
